# EUROPÄISCHE PATENTSCHRIFT

(11) **EP 2 332 659 B1**
(45) Veröffentlichungstag und Bekanntmachung des Hinweises auf die Patenterteilung: **28.03.2018**
(21) Anmeldenummer: 10014039.1
(22) Anmeldetag: 27.10.2010
(51) Int. Cl.: B05B 13/02, B60J 5/00, B60J 5/06, E05D 3/14

(54) **Montagevorrichtung zum Montieren einer Rohbau-Schiebetüre eines Kraftfahrzeugs**
Installation device for installing a shell sliding door of a motor vehicle
Dispositif de montage destiné au montage d'une porte coulissante de gros oeuvre d'un véhicule automobile

(30) Priorität: 07.12.2009 DE 102009057301
(43) Veröffentlichungstag der Anmeldung: 15.06.2011
(73) Patentinhaber: DURA Automotive Holdings U.K., Ltd., Birmingham, B35 7AG (GB)
(72) Erfinder: Heuel, Gerhard, 57462 Olpe (DE); Krehmke, Michael, 58840 Plettenberg (DE); Rottmann, Ralf, 57489 Drolshagen (DE)
(74) Vertreter: Zinnecker, Armin

(56) Entgegenhaltungen:
- FR-A1- 2 835 233
- GB-A- 2 335 398
- US-A1- 2008 303 307

## Beschreibung

Die Erfindung betrifft eine Montagevorrichtung zum Montieren einer Rohbau-Schiebetüre an einer Rohbaukarosserie eines Kraftfahrzeugs während eines Lackiervorgangs und ein Verfahren zum Lackieren einer Rohbau-Schiebetüre und einer Rohbaukarosserie eines Kraftfahrzeugs.

Die Schiebetüre, die auf der Grundlage der Rohbau-Schiebetüre herstellbar ist, umfaßt vorzugsweise eine Führungsschiene und einen Gleitschlitten, der an der Führungsschiene längsverschieblich gelagert ist und der durch ein Mehrgelenk mit der Fahrzeugkarosserie verbunden ist. Die Führungsschiene und der Gleitschlitten sind zunächst noch nicht an der zu lackierenden Rohbau-Schiebetüre befestigt, sie sind allerdings an der Rohbau-Schiebetüre befestigbar.

Eine Schiebtüre, die mit einer derartigen Rohbau-Schiebetüre herstellbar ist, ist aus der DE 10 2008 016 650 B3, auf die hiermit ausdrücklich Bezug genommen wird, bekannt. Bei dieser Schiebetüre kann das Mehrgelenk einen Scharnierbügel, der an dem Gleitschlitten und an einem Karosserieflansch drehbar gelagert ist, und einen Steuerhebel, der an dem Gleitschlitten und an einem oder dem Karosserieflansch drehbar gelagert ist, umfassen. Die vorbekannte Schiebetüre umfaßt ferner einen ersten Zwischenhebel, der an dem Steuerhebel drehbar gelagert ist, und einen zweiten Zwischenhebel, der an dem ersten Zwischenhebel und an dem Gleitschlitten drehbar gelagert ist. Die Schiebetüre ist an dem dem Scharnierbügel abgewandten Ende drehbar und längsverschieblich gelagert. Sie ist dort arretierbar. Der Steuerhebel weist eine Verlängerung auf, an dem der erste Zwischenhebel drehbar gelagert ist. An dem Verbindungsgelenk des ersten Zwischenhebels und des zweiten Zwischenhebels ist ein Führungsstift vorgesehen, der in einer an der Schiebetüre vorgesehenen Führungsbahn geführt ist. Die Führungsbahn verläuft relativ zur Führungsschiene geneigt. Hierbei verläuft die Führungsbahn in Richtung von dem Scharnierbügel weg nach außen geneigt.

Eine andere Schiebetüre, die aus einer erfindungsgemäßen Rohbau-Schiebetüre herstellbar ist, ist in der EP 2 008 846 A2 beschrieben, auf die ebenfalls ausdrücklich Bezug genommen wird. Hier ist eine Antriebstange vorhanden, die an dem Steuerhebel drehbar gelagert ist. Die Schiebetüre ist an dem dem Scharnierbügel abgewandten Ende drehbar und längsverschieblich gelagert. Sie ist dort arretierbar. Die Antriebstange ist an der Führungsschiene drehbar gelagert. Der Steuerhebel weist einen Hebelarm auf, an dem die Antriebstange drehbar gelagert ist. An einem Zwischenhebel, der an dem Gleitschlitten drehbar gelagert ist, ist ein Führungsstift vorgesehen, der in einer an der Schiebetüre vorgesehenen Führungsbahn geführt ist.

Aus der prioritätsälteren, nicht vorveröffentlichten DE 10 2008 026 137 A1, die ebenfalls ausdrücklich in Bezug genommen wird, ist eine weitere Schiebetüre, die aus einer erfindungsgemäßen Rohbau-Schiebetüre herstellbar ist, bekannt. Hier weist der Steuerhebel einen Hebelarm auf, an dem ein Führungsstift vorgesehen ist, der in einer an der Schiebetüre vorgesehenen Führungsbahn geführt ist. Die Führungsbahn verläuft vorzugsweise in Richtung von dem Scharnierbügel weg nach außen geneigt.

Die Lackierung einer Rohbau-Schiebetüre eines Kraftfahrzeugs und einer Rohbaukarosserie eines Kraftfahrzeugs findet in mehreren Schritten statt. Im allgemeinen durchläuft die Rohbaukarosserie einschließlich der Türen und Klappen eines oder mehrere Tauchbäder, beispielsweise eine Reinigungsstufe, eine Entfettung und/oder eine Phosphatierung. In diesen Tauchbädern wird die Rohbaukarosserie gedreht, so daß es erforderlich ist, die Türen und Klappen an der Rohbaukarosserie zu fixieren, damit sie sich nicht unkontrolliert bewegen können. Nach den Tauchbädem kann die Rohbaukarosserie eine Waschstraße durchlaufen. Danach findet die Naßlackierung statt, die aus den Schritten der Grundierung, der Decklackierung und/oder der Klarlackierung bestehen kann. Während der Naßlackierung ist es erforderlich, die Türen und Klappen öffnen und schließen zu können, um beispielsweise auch die Türausschnitte zu lackieren. Nach der Naßlackierung durchläuft die Rohbaukarosserie eine Trockenstufe, in der sie auf beispielsweise 180°C oder eine andere Temperatur erhitzt werden kann.

Bei bestimmten Verfahrensschritten des Lackiervorgangs ist es also wünschenswert oder erforderlich, daß die Rohbautüre eine geschlossene Stellung oder eine gegenüber der geschlossenen Stellung leicht angestellte Stellung einnimmt, in der die Rohbautüre fixiert ist. Die geschlossene Stellung ist dabei diejenige Stellung, in der die Rohbautüre die zugehörige Öffnung in der Rohbaukarosserie ausfüllt, und zwar vorzugsweise in derselben Weise, wie auch die fertige Türe die Öffnung der fertigen Karosserie ausfüllt.

Bei anderen Verfahrensschritten des Lackiervorgangs ist es dagegen wünschenswert oder erforderlich, daß die Rohbautüre aus der zugehörigen Türöffnung der Rohbaukarosserie entfernt ist.

Eine übliche Rohbau-Schwenktüre eines Kraftfahrzeugs kann für den Lackiervorgang vorläufig montiert werden. Das Scharnier für die Verschwenkbarkeit der Schwenktüre ist bereits an der Rohbau-Schwenktüre und an der Rohbaukarosserie vorhanden, so daß es für den Lackiervorgang benutzt werden kann.

Bei einer Rohbau-Schiebetüre für ein Kraftfahrzeug ist dies jedoch nicht der Fall. Hier können die Führungsschiene, der Gleitschlitten und das Mehrgelenk erst nach dem Lackiervorgang an der Rohbau-Schiebetüre angebracht werden, da diese Teile während des Lackiervorgangs beschädigt werden würden. Insbesondere darf die Oberfläche der Führungsschiene nicht mit Lackteilen verunreinigt werden. Die Gelenke des Mehrgelenks sind im allgemeinen hitzeempfindlich und sollen daher die Trockenstufe nicht durchlaufen.

Aus der GB 2 335 398 A ist eine Montagevorrichtung zum Montieren einer Rohbau-Schiebetüre an einer Rohbaukarosserie eines Kraftfahrzeugs während eines Lackiervorgangs bekannt, die eine Karosserieanbindung und eine Türanbindung aufweist. Die Karosserieanbindung ist an der Rohbaukarosserie montierbar. Die Türanbindung ist an der Rohbau-Schiebetüre montierbar. Die Karosserieanbindung und die Türanbindung sind durch ein Mehrgelenk miteinander verbunden.

Die US 2008/303307 A1 offenbart ein Verfahren und eine Vorrichtung zum Montieren einer Kraftfahrzeugtür.

Aus der FR 2 835 233 A1 ist eine Montagevorrichtung nach dem Oberbegriff des Anspruchs 1 bekannt.

Aufgabe der Erfindung ist es, einen verbesserten Lackiervorgang einer Rohbau-Schiebetüre und einer zugehörigen Rohbaukarosserie eines Kraftfahrzeugs zu ermöglichen und ein verbessertes Verfahren zum Lackieren einer Rohbau-Schiebetüre und einer zugehörigen Rohbaukarosserie eines Kraftfahrzeugs vorzuschlagen.

Erfindungsgemäß wird diese Aufgabe durch eine Montagevorrichtung zum Montieren einer Rohbau-Schiebetüre an einer Rohbaukarosserie eines Kraftfahrzeugs mit den Merkmalen des Anspruchs 1 gelöst. Die Montagevorrichtung umfaßt eine Karosserieanbindung, die an der Rohbaukarosserie montierbar ist, und eine Türanbindung, die an der Rohbau-Schiebetüre montierbar ist. Hierbei sind die Karosserieanbindung und die Türanbindung durch ein Mehrgelenk miteinander verbunden.

Die Karosserieanbindung umfasst einen Montagerahmen, der an der B-Säule und an der C-Säule der Rohbaukarosserie montierbar ist. Ein Gelenk des Mehrgelenks befindet sich in der Mitte des Montagerahmens.

Erfindungsgemäß ist die Rohbau-Schiebetüre durch eine Verschwenkung des Mehrgelenks gegenüber der Rohbau-Karosserie verschwenkbar.

Bei einem Verfahren zum Lackieren einer Rohbau-Schiebetüre und einer zugehörigen Rohbaukarosserie eines Kraftfahrzeugs wird die der Erfindung zugrundeliegende Aufgabe durch ein Verfahren zum Lackieren einer Rohbau-Schiebetüre und einer zugehörigen Rohbaukarosserie eines Kraftfahrzeugs mittels einer erfindungsgemäßen Montagevorrichtung gelöst, bei dem die Karosserieanbindung an der Rohbaukarosserie montiert wird und die Türanbindung an der Rohbau-Schiebetüre montiert wird, wobei die Reihenfolge dieser Schritte beliebig ist.

Es kann vorteilhaft sein, wenn zunächst die Türanbindung an der Rohbau-Schiebetüre montiert wird und wenn danach die Karosserieanbindung an der Rohbaukarosserie montiert wird.

Es kann allerdings auch vorteilhaft sein, wenn zunächst die Karosserieanbindung an der Rohbaukarosserie montiert wird und wenn danach die Türanbindung an der Rohbau-Schiebetüre montiert wird.

Ein Ausführungsbeispiel der Erfindung wird nachstehend anhand der beigefügten Zeichnung im einzelnen erläutert. In der Zeichnung zeigt
- Fig. 1: eine vorbekannte Schiebetüre für ein Kraftfahrzeug in der geschlossenen Stellung in einer schematischen Ansicht von oben,
- Fig. 2: die Schiebetüre gemäß Fig. 1 in einer teilweise geöffneten Stellung in einer der Fig. 1 entsprechenden schematischen Ansicht von oben,
- Fig. 3: die Schiebetüre gemäß Fig. 1 und 2 in der vollständig geöffneten Stellung in einer den Fig. 1 und 2 entsprechenden schematischen Ansicht von oben,
- Fig. 4: eine Rohbau-Schiebetüre, aus der die Schiebetüre gemäß Fig. 1 bis 3 herstellbar ist, in der geschlossenen Stellung in einer schematischen Ansicht von oben, zusammen mit einem Ausführungsbeispiel der erfindungsgemäßen Montagevorrichtung und
- Fig. 5: die Rohbau-Schiebetüre und die Montagevorrichtung gemäß Fig. 4 in der geöffneten Stellung in einer schematischen Ansicht von oben.

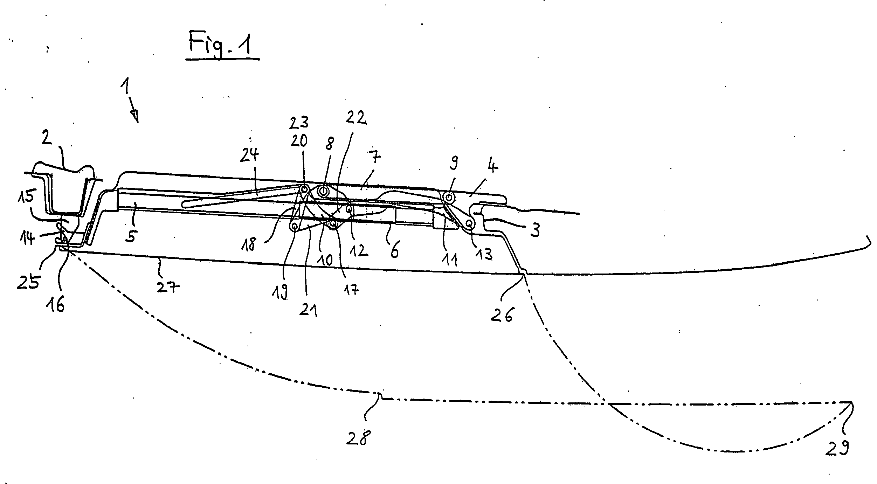

Fig. 1, 2 und 3 zeigen die Schiebetüre 1 nach einem Ausführungsbeispiel der DE 10 2008 016 650 B3. Die Schiebetüre 1 ist die linke hintere Türe eines Kraftfahrzeugs. Sie befindet sich in der Öffnung der Karosserie zwischen der B-Säule 2 und einem hinteren Karosserieteil 3, in dessen Bereich ein Karosserieflansch 4 mit der Karosserie verbunden ist. Bei dem hinteren Karosserieteil 3 kann es sich um die C-Säule oder um die A-Säule handeln.

Die Schiebetüre 1 weist an ihrer Innenseite eine Führungsschiene 5 auf. An der Führungsschiene 5 ist ein Gleitschlitten 6 längsverschieblich gelagert.

Die Schiebetüre 1 weist ferner einen Scharnierbügel 7 und einen Steuerhebel 11 auf. Der Scharnierbügel 7 ist an dem Gleitschlitten 6 um ein Gelenk 8 und an dem Karosserieflansch 4 um ein Gelenk 9 drehbar gelagert. Der Steuerhebel 11 ist an dem Gleitschlitten 6 um ein Gelenk 12 und an dem Karosserieflansch 4 um ein Gelenk 13 drehbar gelagert.

An dem Steuerhebel 11 ist ein erster Zwischenhebel 10 drehbar gelagert, und zwar um die Achse eines Gelenks 17. An dem Gleitschlitten 6 ist ein zweiter Zwischenhebel 18 drehbar gelagert, und zwar um die Achse eines Gelenks 19. Das Gelenk 19 liegt im äußeren Bereich des Gleitschlittens 6. Es liegt im Bereich des vorderen Endes des Gleitschlittens 6. Die von den Gelenken 17, 19 abgewandten Enden der Zwischenhebel 10, 18 sind durch ein Gelenk 20 drehbar miteinander verbunden.

Der erste Zwischenhebel 10 und der zweite Zwischenhebel 18 bilden einen Kniehebel. Da das Verbindungsgelenk 20 der Zwischenhebel 10, 18 in Bezug auf das Kraftfahrzeug weiter innen liegt als die Gelenke 17, 19, weist der von den Zwischenhebeln 10, 18 gebildete Kniehebel in Bezug auf das Kraftfahrzeug nach innen.

An dem Gleitschlitten 6 ist eine Gelenkplatte 21 befestigt, die die Gelenke 8, 12 und 19 trägt. Der Scharnierbügel 7, der Steuerhebel 11, der Gleitschlitten 6 bzw. die Gelenkplatte 21 und der Karosserieflansch 4 bilden mit den Gelenken 8, 9, 12 und 13 ein Mehrgelenk.

An dem dem Scharnierbügel 7 gegenüberliegenden Ende der Schiebetüre 1 ist an der Schiebetüre 1 eine U-förmige Aufnahme 14 vorgesehen, die geneigt zur Fahrzeug-Längsrichtung verläuft, nämlich in Fahrzeugrichtung nach vorne nach innen. Sie ist an ihrem dem Scharnierbügel 7 abgewandten, im Ausführungsbeispiel also vorderen inneren Ende offen. An einem Karosserieflansch 15, der an der B-Säule 2 befestigt ist, ist ein Scharnierbolzen 16 vorgesehen, der in die U-förmige Aufnahme 14 eingreift. In der in Fig. 1 gezeigten, vollständig geschlossenen Stellung der Schiebetüre befindet sich der Scharnierbolzen 16 am Grund der U-förmigen Aufnahme 14. Er kann dort arretiert werden (in der Zeichnung nicht dargestellt).

Der Steuerhebel 11 weist eine Verlängerung 22 auf, die sich von dem Gelenk 12 nach außen erstreckt. Die Verlängerung 22 verlängert den Steuerhebel 11 längs der Verbindungslinie von dem Gelenk 13 zu dem Gelenk 12 über das Gelenk 12 hinaus. Dabei knickt die Verlängerung 22 gegenüber der Verbindungslinie zwischen den Gelenken 13 und 12, also der Längserstreckung des Steuerhebels 11, geringfügig nach außen bzw. hinten ab. An dem Steuerhebel 11 ist im Bereich des äußeren Endes der Verlängerung 22 das Gelenk 17 für den ersten Zwischenhebel 10 vorgesehen.

An dem Verbindungsgelenk 20 des ersten Zwischenhebels 10 und des zweiten Zwischenhebels 18 ist ein Führungsstift 23 vorgesehen, der in einer Führungsbahn 24 geführt ist. Die Führungsbahn 24 ist an der Schiebetüre 1 vorgesehen. Dementsprechend ist die Führungsbahn 24 also eine türfeste Führungsbahn. Sie verläuft relativ zur Führungsschiene 5 in Richtung von dem Scharnierbügel 7 weg nach außen geneigt. Die Führungsbahn 24 ist durchgehend linear ausgestaltet. Ihre Neigung ist über ihre gesamte Länge gleich groß.

In der vollständig geschlossenen Stellung der Schiebetüre 1, die in Fig. 1 gezeigt ist, liegt der Scharnierbolzen 16 in der U-förmigen Aufnahme 14, und zwar im Bereich von deren Ende. Der Führungsstift 23 befindet sich im Bereich des hinteren, inneren Endes der Führungsbahn 24. Der erste Zwischenhebel 10 weist von dem Gelenk 17 nach vorne und innen. Der zweite Zwischenhebel 18 weist von dem Gelenk 19 nach hinten und innen.

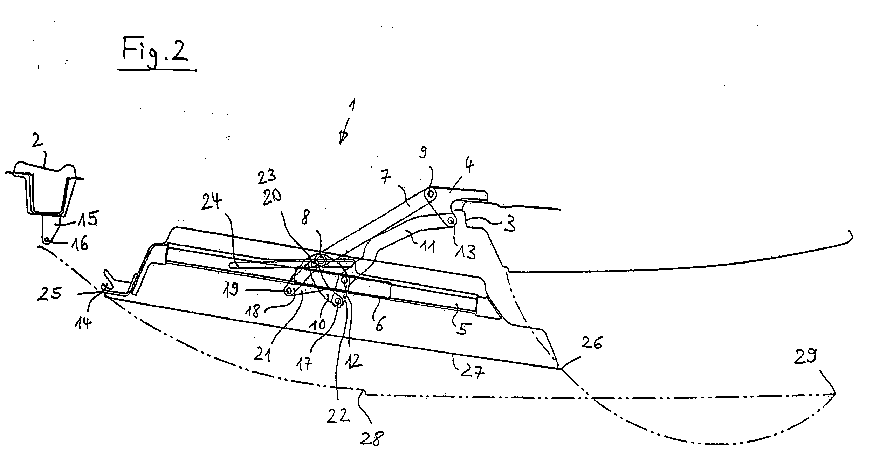

Im Verlauf der Öffnungsbewegung wird die Stellung nach Fig. 2 durchlaufen. Diese Öffnungsbewegung kann dadurch erzeugt werden, daß die Führungsschiene 5 relativ zu dem Gleitschlitten 6 nach hinten bewegt wird. An dem Gleitschlitten 6 kann ein Motor, insbesondere ein Elektromotor, zum Antrieb der Führungsschiene 5 relativ zum Gleitschlitten 6 vorhanden sein. Stattdessen oder zusätzlich kann ein Motor, insbesondere ein Elektromotor, zum Antrieb des Scharnierbügels 7 und/oder des Steuerhebels 11 vorhanden sein. Vorteilhaft ist es, wenn an dem Karosserieflansch 4 oder einem sonstigen Karosserieteil ein Motor zum Antrieb des Scharnierbügels 7 und/oder des Steuerhebels 11 vorhanden ist.

Die Öffnungsbewegung kann allerdings stattdessen oder zusätzlich auch von Hand erzeugt werden. Insbesondere kann die Führungsschiene 5 manuell nach hinten relativ zum Gleitschlitten 6 bewegt werden. Zu diesem Zweck können an der Schiebetüre 1 ein Griff oder mehrere Griffe vorgesehen sein, durch den oder die die Schiebetüre 1 und mit ihr die Führungsschiene 5 relativ zum Gleitschlitten 6 bewegt werden kann. Der Griff kann am inneren vorderen Ende der Schiebetüre 1 und/oder am äußeren vorderen Ende der Schiebetüre 1 und/oder am äußeren hinteren Ende der Schiebetüre 1 vorgesehen sein. Die Schiebetüre 1 kann durch einen Kraftangriff an jeder dieser drei Stellen geöffnet und auch wieder geschlossen werden.

Ohne den Führungsstift 23 könnte der Gleitschlitten 6 auf der Führungsschiene 5 frei verschoben werden. Der in der Führungsbahn 24 geführte Führungsstift 23 verhindert diese freie Verschiebbarkeit und legt die relative Position des Gleitschlittens 6 gegenüber der Führungsschiene 5 und damit gegenüber der Schiebetüre 1 fest. Dies erfolgt in den Abschnitten der Führungsbahn 24, die gegenüber der Führungsschiene 5 eine von Null verschiedene Neigung aufweisen, die also nicht parallel zur Führungsschiene 5 verlaufen. Die Führungsbahn 24 weist auf ihrer gesamten Länge dieselbe von Null verschiedene Neigung gegenüber der Führungsschiene 5 auf.

Wenn die Führungsschiene 5 motorisch und/oder manuell relativ zum Gleitschlitten 6 nach hinten bewegt wird, bewegt sich der in der Führungsbahn 24 geführte Führungsstift 23 relativ zur Führungsschiene 5 und zum Gleitschlitten 6 nach außen, wodurch der zweite Zwischenhebel 18 im Uhrzeigersinn um das Gelenk 19 verschwenkt wird. Durch die Bewegung des Führungsstifts 23 relativ zum Gleitschlitten 6 nach hinten und außen wird das am anderen Ende des ersten Zwischenhebels 10 befindliche Gelenk 17 ebenfalls nach hinten bewegt, wodurch der Steuerhebel 11 entgegen dem Uhrzeigersinn um das Gelenk 12 gedreht wird. Hierdurch wird der Steuerhebel 11 entgegen dem Uhrzeigersinn um das Gelenk 13 an dem Karosserieflansch 4 verschwenkt. Durch die Verschwenkung des Steuerhebels 11 wird auch der Scharnierbügel 7 entgegen dem Uhrzeigersinn um das Gelenk 9 verschwenkt. Die Gelenkplatte 21 des Gleitschlittens 6 wird durch die Verschwenkung des Scharnierbügels 7 um das Gelenk 9 ebenfalls zwangsgeführt, da sie mit dem Scharnierbügel 7, dem Steuerhebel 11 und dem Karosserieflansch 4 - wie ausgeführt - ein Mehrgelenk bildet.

Die Antriebsbewegung für die Öffnung der Schiebetüre 1 kann allerdings auch auf andere Weise eingeleitet werden, insbesondere durch einen motorischen und/oder manuellen Antrieb des Scharnierbügels 7 und/oder des Steuerhebels 11 und/oder des ersten Zwischenhebels 10 und/oder des zweiten Zwischenhebels 18 um eines oder mehrere der Gelenke 9, 8, 13, 12, 17, 20, 19.

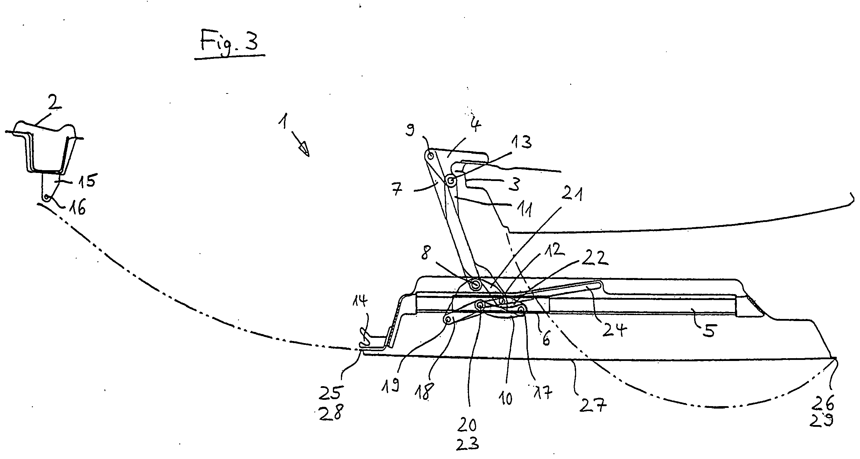

Die vollständig geöffnete Stellung der Schiebetüre 1 ist in Fig. 3 dargestellt. Der erste Zwischenhebel 10 wurde gegenüber der Verlängerung 22 um das Gelenk 17 um etwa 90° im Uhrzeigersinn verschwenkt. Der Führungsstift 23 hat das vordere, geschlossene Ende der Führungsbahn 24 erreicht. Der zweite Zwischenhebel 18 wurde gegenüber dem Gleitschlitten 6 bzw. der Gelenkplatte 21 um das Gelenk 19 um etwa 45° im Uhrzeigersinn verschwenkt. Der Öffnungswinkel der Zwischenhebel 10, 18 an dem Gelenk 20 wurde von etwa 30° auf etwa 150° vergrößert. Der Steuerhebel 11 und der Scharnierbügel 7 wurden um einen Winkel von 120° entgegen dem Uhrzeigersinn um die Gelenke 13 und 9 verschwenkt.

Wenn die Schiebetüre 1 geschlossen werden soll, werden die beschriebenen Stellungen in umgekehrter Reihenfolge durchlaufen. Die Schließbewegung der Schiebetüre 1 kann dadurch bewirkt werden, daß die Führungsschiene 5 motorisch und/oder manuell relativ zum Gleitschlitten 6 nach vorne bewegt wird. Die Relativbewegung der Führungsschiene 5 wird durch die Führungsbahn 24 auf den Führungsstift 23 übertragen und von dort über den ersten Zwischenhebel 10 in das beschriebene Mehrgelenk eingeleitet. Es ist allerdings auch möglich, die Schließbewegung in einer Weise einzuleiten, wie sie für die Öffnungsbewegung beschrieben wurde.

In Fig. 1, 2 und 3 sind die Wege des vorderen Endes 25 und des hinteren Endes 26 des äußeren Türblechs 27 eingezeichnet. Das vordere Ende 25 des äußeren Türblechs 27 bewegt sich zunächst in einem Winkel von etwa 30° gegenüber der Fahrzeug-Längsachse nach hinten und außen. Der Neigungswinkel der U-förmigen Aufnahme 14 entspricht diesem Winkel. Es beschreibt anschließend einen Bogen mit einem großen Radius, dessen Ende 28 eine parallel zur Fahrzeug-Längsachse verlaufende Tangente aufweist. Das hintere Ende 26 des äußeren Türblechs 27 bewegt sich zunächst annähernd rechtwinkelig von der Karosserie weg und beschreibt dann einen enger werdenden Bogen bis zu einem Endpunkt 29, der im wesentlichen denselben Abstand von der Karosserie des Fahrzeugs aufweist wie der Endpunkt 28 des vorderen Endes 25.

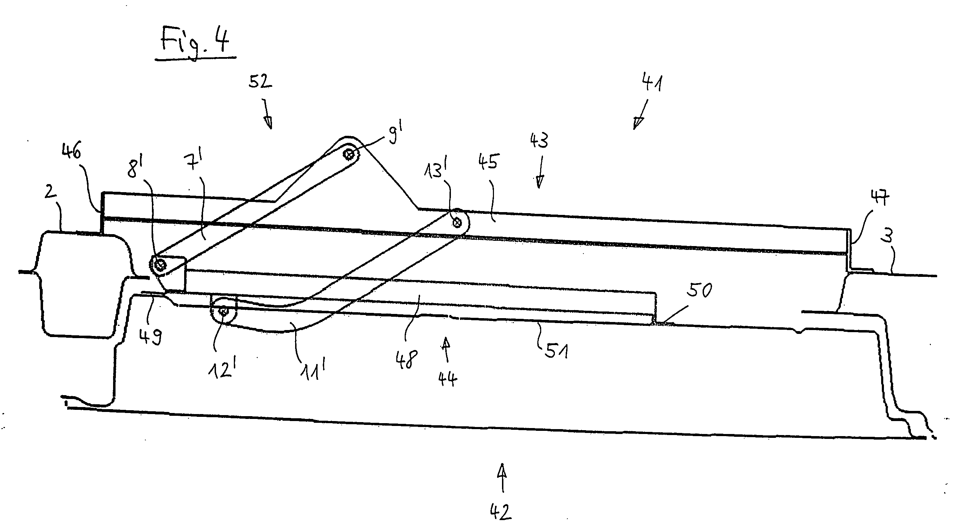

Die in Fig. 4 gezeigte Montagevorrichtung 41 zum Montieren einer Rohbau-Schiebetüre 42 an einer Rohbaukarosserie des Kraftfahrzeugs während eines Lackiervorgangs umfaßt eine Karosserieanbindung 43 und eine Türanbindung 44. Die Karosserieanbindung 43 umfaßt einen Montagerahmen 45, der an der B-Säule 2 und an der C-Säule 3 der Rohbaukarosserie montiert ist. Zu diesem Zweck ist der Montagerahmen 45 an seinem vorderen und hinteren Ende mit Montagewinkeln 46, 47 versehen. Jeweils ein Schenkel der Montagewinkel 46, 47 liegt an der B-Säule 2 und an der C-Säule 3 an. Der jeweilige Schenkel ist dort lösbar mit der B-Säule 2 und der C-Säule 3 verbunden. Insbesondere sind die Montagewinkel 46, 47 mit der B-Säule 2 und der C-Säule 3 verschraubt.

Die Türanbindung 44 umfaßt einen Montagerahmen 48, der an der Rohbau-Schiebetüre 42 montiert ist. Hierfür weist der Montagerahmen 48 an seinen Enden Montagewinkel 49, 50 auf, von denen jeweils ein Schenkel mit dem Innenblech 51 der Rohbau-Schiebetüre 42 lösbar verbunden ist. Insbesondere sind die Schenkel der Montagewinkel 49, 50 mit dem Innenblech 51 verschraubt.

Die Karosserieanbindung 43 und die Türanbindung 44 sind durch ein Mehrgelenk 52 miteinander verbunden. Das Mehrgelenk 52 umfaßt, ähnlich wie das Mehrgelenk der fertigen Schiebetüre 1, einen Scharnierbügel 7', der an dem Montagerahmen 45 um ein Gelenk 9' und an dem Montagerahmen 48 um ein Gelenk 8' schwenkbar gelagert ist, und einen Steuerhebel 11', der an dem Montagerahmen 45 um ein Gelenk 13' und an dem Montagerahmen 48 um ein Gelenk 12' schwenkbar gelagert ist. Das Gelenk 13' befindet sich im wesentlichen in der Mitte des Montagerahmens 45 und in Fahrzeugquerrichtung innerhalb der Verbindungslinie der B-Säule 2 mit der C-Säule 3. Das Gelenk 9' befindet sich in Fahrzeuglängsrichtung vor dem Gelenk 13' und in Fahrzeugquerrichtung innerhalb des Gelenks 13'. Das Gelenk 8' befindet sich in Fahrzeuglängsrichtung hinter der B-Säule 2 und vor den Gelenken 13' und 9'. Es befindet sich in Fahrzeugquerrichtung außerhalb des Gelenks 13'. Das Gelenk 12' befindet sich in Fahrzeuglängsrichtung hinter dem Gelenk 8' und vor dem Gelenk 9'. Es befindet sich in Fahrzeugquerrichtung außerhalb des Gelenks 8'.

Fig. 4 zeigt die Montagevorrichtung in der geschlossenen Stellung.

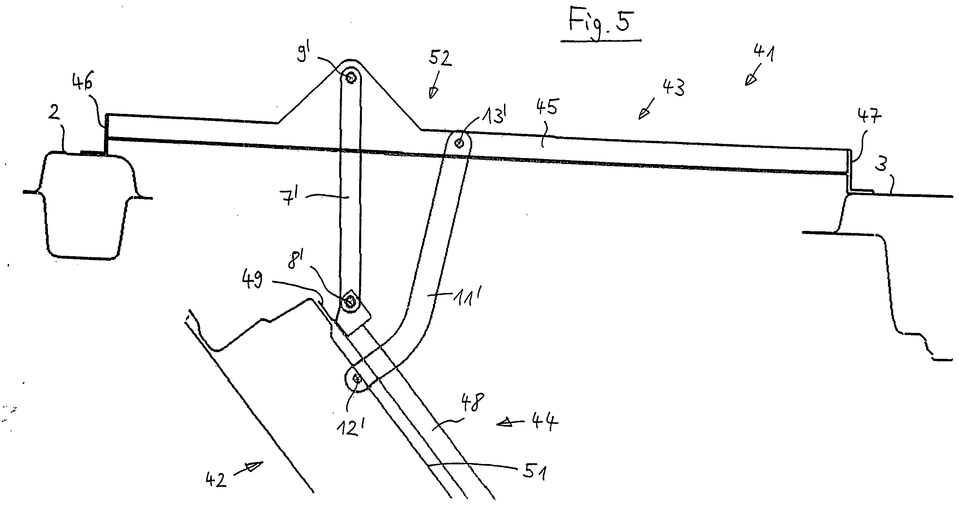

Durch eine Verschwenkung des Mehrgelenks 52 kann die Rohbau-Schiebetüre 42 gegenüber der Rohbaukarosserie verschwenkt werden. Fig. 5 zeigt die vollständig geöffnete Stellung der Rohbau-Schiebetüre 42. Der Scharnierbügel 7' ist um das Gelenk 9' und der Steuerhebel 11' ist um das Gelenk 13' jeweils entgegen dem Uhrzeigersinn verschwenkt worden.

In der geschlossenen Stellung gemäß Fig. 4 füllt die Rohbau-Schiebetüre 42 die zugehörige Öffnung in der Rohbaukarosserie aus. Die Rohbau-Schiebetüre 42 ist in dieser Stellung fixiert. Die Fixierung kann durch lösbare Klammern erfolgen und/oder dadurch, daß das Mehrgelenk 52 arretiert wird. In dieser geschlossenen Stellung gemäß Fig. 4 können die Tauchbäder durchlaufen werden.

In der geöffneten Stellung gemäß Fig. 5 können die Schritte der Naßlackierung durchgeführt werden. Es ist möglich, während dieser Verfahrensschritte die Rohbau-Schiebetüre 42 mehr oder weniger zu öffnen oder zu schließen, was je nach Erfordernis auch mehrmals erfolgen kann und was durch Industrieroboter durchgeführt werden kann.

Die Montage der Montagevorrichtung 41 kann in folgenden Schritten erfolgen: Zunächst werden die Karosserieanbindung 43 und die Türanbindung 44 durch das Mehrgelenk 52 miteinander verbunden. Anschließend wird die Türanbindung 44 an der Rohbau-Schiebetüre 42 montiert. Die derart montierte Einheit, bestehend aus der Montagevorrichtung 41 und der Rohbau-Schiebetüre 42, wird schließlich an der Rohbaukarosserie, also an der B-Säule 2 und der C-Säule 3, positioniert, und die Karosserieanbindung 43 wird an der Rohbaukarosserie, also an der B-Säule 2 und der C-Säule 3, montiert.

Nach der Durchführung des Lackiervorgangs kann die Montagevorrichtung 41 wieder demontiert werden. Dies erfolgt vorzugsweise in umgekehrter Reihenfolge. Es ist allerdings vorteilhaft, die Verbindung der Karosserieanbindung 43 und der Türanbindung 44 durch das Mehrgelenk 52 nicht zu lösen, sondern lediglich die Türanbindung 44 von der Rohbau-Schiebetüre 42 zu demontieren und die Karosserieanbindung 43 von der Rohbaukarosserie, also von der B-Säule 2 und von der C-Säule 3, zu demontieren. Die Montagevorrichtung 41, bestehend aus der durch das Mehrgelenk 52 verbundenen Karosserieanbindung 43 und der Türanbindung 44, kann dann für den nächsten Lackiervorgang der nächsten Rohbau-Schiebetüre und der nächsten Rohbaukarosserie verwendet werden.

Aus der Rohbau-Schiebetüre 42 kann nach der Lackierung eine Schiebetüre 1 oder eine andersartige Schiebetüre hergestellt werden.

## Patentansprüche

1. Montagevorrichtung zum Montieren einer Rohbau-Schiebetüre (42) an einer Rohbaukarosserie (2, 3) eines Kraftfahrzeugs während eines Lackiervorgangs mit einer Karosserieanbindung (43), die an der Rohbaukarosserie (2, 3) montierbar ist, und einer Türanbindung (44), die an der Rohbau-Schiebetüre (42) montierbar ist, wobei die Karosserieanbindung (43) und die Türanbindung (44) durch ein Mehrgelenk (52) miteinander verbunden sind, wobei die Karosserieanbindung (43) einen Montagerahmen (45) umfasst, der an der B-Säule (2) und an der C-Säule (3) der Rohbaukarosserie montierbar ist, und wobei sich ein Gelenk (13') des Mehrgelenks (52) in der Mitte des Montagerahmens (45) befindet,
**dadurch gekennzeichnet,**
**dass** durch eine Verschwenkung des Mehrgelenks (52) gegenüber der Rohbau-Karosserie (2, 3) die Rohbau-Schiebetüre (42) verschwenkbar ist.

2. Verfahren zum Lackieren einer Rohbau-Schiebetüre (42) und einer zugehörigen Rohbaukarosserie (2, 3) eines Kraftfahrzeugs mittels einer Montagevorrichtung nach Anspruch 1,
**dadurch gekennzeichnet,**
**dass** die Karosserieanbindung (43) an der Rohbaukarosserie (2, 3) montiert wird und dass die Türanbindung (44) an der Rohbau-Schiebetüre (42) montiert wird.

3. Verfahren nach Anspruch 2, **dadurch gekennzeichnet, dass** zunächst die Türanbindung (44) an der Rohbau-Schiebetüre (42) montiert wird und dass danach die Karosserieanbindung (43) an der Rohbaukarosserie (2, 3) montiert wird.

4. Verfahren nach Anspruch 2, **dadurch gekennzeichnet, dass** zunächst die Karosserieanbindung (43) an der Rohbaukarosserie (2, 3) montiert wird und dass danach die Türanbindung (44) an der Rohbau-Schiebetüre (42) montiert wird.

## Claims

1. A mounting device for mounting a bodyshell sliding door (42) to a body-in-white (2, 3) of a motor vehicle during a painting operation, comprising a body connection (43) which can be mounted to the body-in-white (2, 3), and a door connection (44) which can be mounted to the bodyshell sliding door (42), wherein the body connection (43) and the door connection (44) are connected with each other by a multiple joint (52), wherein the body connection (43) comprises a mounting frame (45) which can be mounted to the B-pillar (2) and to the C-pillar (3) of the body-in-white, and wherein a joint (13') of the multiple joint (52) is located in the middle of the mounting frame (45),
**characterized in**
**that** by pivoting the multiple joint (52) with respect to the body-in-white (2, 3) the bodyshell sliding door (42) can be pivoted.

2. A method for painting a bodyshell sliding door (42) and an associated body-in-white (2, 3) of a motor vehicle by means of a mounting device according to claim 1,
**characterized in**
**that** the body connection (43) is mounted to the body-in-white (2, 3) and that the door connection (44) is mounted to the bodyshell sliding door (42).

3. The method according to claim 2, **characterized in that** first the door connection (44) is mounted to the bodyshell sliding door (42) and that thereafter the body connection (43) is mounted to the body-in-white (2, 3).

4. The method according to claim 2, **characterized in that** first the body connection (43) is mounted to the body-in-white (2, 3) and that thereafter the door connection (44) is mounted to the bodyshell sliding door (42).

## Revendications

1. Dispositif de montage pour monter une porte coulissante (42) de structure brute sur une carrosserie brute (2, 3) d'un véhicule automobile pendant une opération de peinture, comportant une connexion de carrosserie (43), qui peut être montée sur la carrosserie brute (2, 3), et une connexion de porte (44), qui peut être montée sur la porte coulissante (42) de structure brute, la connexion de carrosserie (43) et la connexion de porte (44) étant reliées les unes aux autres par une articulation multiple (52), la connexion de carrosserie (43) comportant un cadre de montage (45), qui peut être monté sur le montant milieu (2) et sur le montant arrière (3) de la carrosserie brute, et une articulation (13') de l'articulation multiple (52) étant situé au milieu du cadre de montage (45),
**caractérisé en ce que**
par un pivotement de l'articulation multiple (52) par rapport à la carrosserie brute (2, 3) la porte coulissante (42) de structure brute peut être pivotée.

2. Procédé de peinture d'une porte coulissante (42) de structure brute et d'une carrosserie brute (2, 3) associée d'un véhicule automobile au moyen d'un dispositif de montage selon la revendication 1,
**caractérisé en ce que**
la connexion de carrosserie (43) est montée sur la carrosserie brute (2, 3) et que la connexion de porte (44) est montée sur la porte coulissante (42) de structure brute.

3. Procédé selon la revendication 2, **caractérisé en ce que** d'abord la connexion de porte (44) est montée sur la porte coulissante (42) de structure brute et qu'ensuite la connexion de carrosserie (43) est montée sur la carrosserie brute (2, 3).

4. Procédé selon la revendication 2, **caractérisé en ce que** d'abord la connexion de carrosserie (43) est montée sur la carrosserie brute (2, 3) et qu'ensuite la connexion de porte (44) est montée sur la porte coulissante (42) de structure brute.
